# FASCICULE DE BREVET EUROPEEN

(11) **EP 1 529 369 B1**
(45) Date de publication et mention de la délivrance du brevet: **13.09.2006**
(21) Numéro de dépôt: 03732820.0
(22) Date de dépôt: 10.06.2003
(51) Int. Cl.: H04L 9/08, H04N 7/16

(54) **PROC D D' CHANGE S CURIS D'INFORMATIONS ENTRE DEUX DISPOSITIFS**
VORRICHTUNG ZUM GESICHERTEN DATENAUSTAUSCH ZWISCHEN ZWEI VORRICHTUNGEN
METHOD FOR SECURE DATA EXCHANGE BETWEEN TWO DEVICES

(30) Priorité: 12.06.2002 CH 10022002
(43) Date de publication de la demande: 11.05.2005
(73) Titulaire: NagraCard SA, 1033 Cheseaux-sur-Lausanne (CH)
(72) Inventeur: BRIQUE, Olivier, 1802 Corseaux (CH); NICOLAS, Christophe, CH-1028 Préverenges (CH); SASSELLI, Marco, CH-1803 Chardonne (CH)
(74) Mandataire: Wenger, Joel-Théophile
(86) Numéro de dépôt international: PCT/IB2003/002425
(87) Numéro de publication internationale: WO 2003/107585

(56) Documents cités:
- WO-A-97/38530
- US-A- 5 371 794

## Description

La présente invention concerne un procédé d'échange sécurisé d'informations entre deux dispositifs localement connectés entre eux, notamment entre un récepteur et un module de sécurité.

Elle concerne également un récepteur agencé pour mettre en oeuvre le procédé selon l'invention.

Il existe actuellement des procédés sécurisés permettant d'échanger des informations entre deux dispositifs tels qu'un récepteur et un module de sécurité, par exemple dans le domaine de la télévision à péage.

Un tel procédé est notamment décrit dans la demandé internationale de brevet publiée sous le N° WO 97/38530. Selon ce procédé, le récepteur contient une clé de chiffrement asymétrique publique et le module de sécurité contient la clé de chiffrement asymétrique privée correspondante. Au moment de l'initialisation du procédé, c'est-à-dire par exemple lorsque le module de sécurité est inséré dans le récepteur, le récepteur génère un nombre aléatoire A et une clé aléatoire Ci. Les deux éléments aléatoires sont chiffrés par la clé publique du récepteur, puis envoyés, sous forme chiffrée, au module de sécurité. Le nombre aléatoire et la clé aléatoire sont alors déchiffrés au moyen de la clé privée.

Selon un mode de réalisation particulier, le nombre aléatoire A, déchiffré avec la clé privée, peut ensuite être chiffré dans le module de sécurité au moyen de la clé aléatoire Ci, et renvoyé au récepteur, puis déchiffré dans le récepteur au moyen de la même clé aléatoire initialement générée. Le nombre aléatoire A' obtenu à ce stade est comparé à celui, A, généré par le récepteur afin de vérifier que le module de sécurité correspond bien à celui qui doit être utilisé avec le récepteur. Dans le cas où un autre module de sécurité est utilisé avec ce récepteur, les deux nombres aléatoires A et A' ne correspondront pas et la communication est interrompue. Si le module de sécurité et le récepteur sont reconnus comme pouvant échanger des informations l'un avec l'autre, la clé aléatoire Ci est utilisée comme clé de session, c'est-à-dire que toutes les informations échangées sous forme sécurisée entre le module de sécurité et le récepteur pendant une session donnée, par exemple jusqu'à ce que le module de sécurité soit retiré, sont chiffrées au moyen de cette clé aléatoire.

Ce mode de fonctionnement présente des lacunes du point de vue de la sécurité. En effet, le récepteur n'est pas considéré comme un élément sûr, contrairement au module de sécurité et il est possible de déterminer la clé publique d'un récepteur grâce à des moyens techniques et informatiques d'analyse. Il est dès lors possible de modifier un récepteur de telle sorte qu'il génère une clé prédéfinie en lieu et place d'une clé aléatoire Ci. Dans ce cas, la vérification de la communication avec le module de sécurité s'effectuera avec une clé prédéterminée. De cette façon, la clé "aléatoire" Ci étant connue, les messages peuvent être déchiffrés et, dans le cas de la télévision à péage en particulier, les informations nécessaires au fonctionnement du système, notamment les « Control Words » peuvent être déchiffrés et mis à disposition de tiers, par exemple en utilisant un réseau informatique tel qu'Internet. Il est à noter que la clé aléatoire Ci est une clé symétrique. Lorsqu'elle est connue, soit parce qu'elle a été imposée, soit parce qu'elle a été obtenue d'une autre manière, elle peut être utilisée pour déchiffrer à la fois les messages provenant du récepteur et ceux provenant du module de sécurité.

La présente invention se propose de pallier cet inconvénient en offrant un procédé de transfert sécurisé d'informations entre un récepteur et un module de sécurité grâce auquel le déchiffrement non autorisé d'informations est particulièrement complexe.

Ce but est atteint par un procédé d'échange sécurisé d'informations entre deux dispositifs localement connectés entre eux, notamment entre un module de sécurité et un récepteur, le premier dispositif comportant au moins une première clé de chiffrement d'une paire de clés de chiffrement asymétriques et le second dispositif comportant au moins une seconde clé de chiffrement de ladite paire de clés de chiffrement asymétriques, ces clés étant préalablement initialisées dans le premier et le second dispositif, ce procédé comportant les étapes consistant à :
- générer, dans le premier dispositif au moins un premier nombre aléatoire,
- générer, dans le second dispositif, au moins un second nombre aléatoire,
- chiffrer ledit premier nombre aléatoire par ladite première clé de chiffrement,
- chiffrer ledit second nombre aléatoire par ladite seconde clé de chiffrement,
- transmettre ledit premier nombre aléatoire chiffré au second dispositif,
- transmettre ledit second nombre aléatoire chiffré au premier dispositif,
- déchiffrer, dans ledit second dispositif, le premier nombre aléatoire chiffré,
- déchiffrer, dans ledit premier dispositif, le second nombre aléatoire chiffré
- combiner lesdits nombres aléatoires générés par l'un des dispositifs et reçus par l'autre dispositif pour générer une clé de session,
- et utiliser la clé de session pour chiffrer tout ou partie des informations échangées entre le premier et le second dispositif.
La présente invention et ses avantages seront mieux compris en référence à différents modes de réalisation particuliers de l'invention et aux dessins annexés, dans lesquels :
- la figure 1 représente un premier mode de réalisation de la présente invention,
- la figure 2 illustre un deuxième mode de réalisation de l'invention,
- la figure 3 illustre de façon schématique un type de structure de nombres tels qu'utilisés dans le procédé selon l'invention, et
- la figure 4 représente un troisième mode de réalisation de cette invention.

En référence à ces figures, la référence 10 représente de façon schématique, un module de sécurité et la référence 11, un récepteur. Le module de sécurité 10 et le récepteur 11 sont dénommés conjointement les dispositifs dans la suite du texte. De façon connue de l'homme du métier, le module de sécurité 10 peut prendre la forme notamment d'une carte à puce ou d'un connecteur contenant une puce tel qu'un connecteur connu sous l'appellation « dongle ». Il est clair que d'autres formes de réalisation pourraient être imaginées sans sortir du cadre de la présente invention. Ce module de sécurité 10 contient une clé asymétrique privée PAKV d'une paire de clés asymétriques. Cette clé peut être introduite dans le module de sécurité 10 par exemple lors de la fabrication du module ou dans une étape ultérieure, dans un centre de gestion de données ou grâce à une liaison sécurisée entre ledit centre de gestion et le module de sécurité. Elle est stockée dans une mémoire non volatile du module.

Le récepteur 11, en particulier dans le cas de la télévision à péage, est généralement formé d'un boîtier connecté au téléviseur. Il contient une clé asymétrique publique PAKB provenant de ladite paire de clés asymétriques. Cette clé publique est donc appariée à la clé privée du module de sécurité. La clé publique est généralement programmée à la fabrication du récepteur ou lors d'une phase d'initialisation en milieu protégé. Elle peut également être téléchargée de façon sécurisée par télédiffusion.

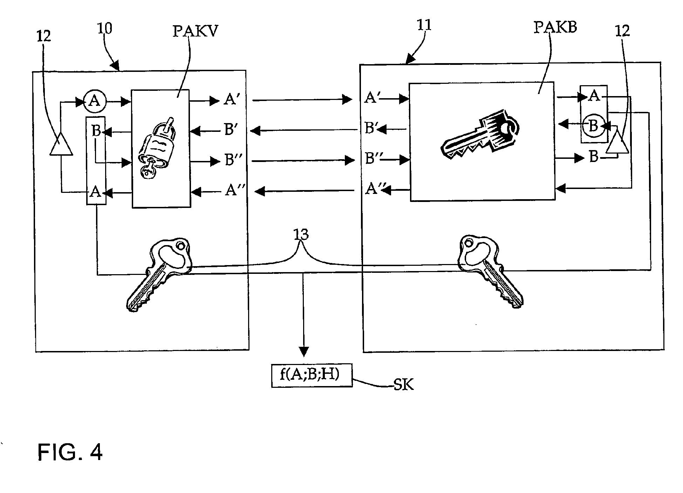

Dans le domaine de la télévision à péage notamment, il est souhaitable qu'un seul récepteur fonctionne avec un seul module de sécurité. Ceci permet d'éviter que des droits chargés dans un module de sécurité appartenant à un titulaire donné puissent être utilisés dans plusieurs récepteurs appartenant à d'autres titulaires. Pour cette raison, le module de sécurité et le récepteur sont appariés de telle façon qu'un seul module de sécurité ne puisse fonctionner qu'avec un seul récepteur et inversement. Cet appariement est réalisé grâce à la paire de clés asymétrique dont l'une des clés est liée au module de sécurité et dont l'autre clé est liée au récepteur. En principe, les paires de clés asymétriques sont uniques. Toutefois, en pratique, lorsque le nombre d'utilisateurs est très élevé, il est possible d'attribuer plusieurs fois la même paire de clés, tout en maintenant pratiquement nul, le risque que des droits soient échangés. Ce risque peut être maintenu totalement nul en utilisant une clé symétrique supplémentaire unique, comme cela est expliqué ci-dessous en référence à la figure 4.

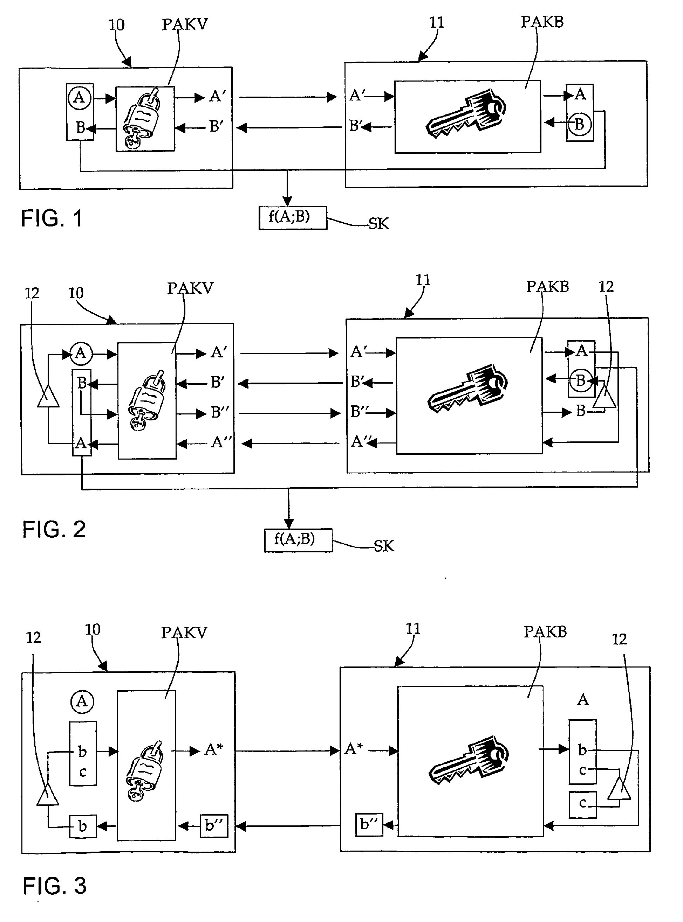

Dans le mode de réalisation illustré par la figure 1, le procédé de l'invention se déroule de la façon suivante : lorsqu'une communication entre les deux dispositifs, à savoir le module de sécurité 10 et le récepteur 11 est initiée, le module de sécurité génère tout d'abord un nombre aléatoire A. Celui-ci est représenté entouré d'un cercle sur la figure 1. Ce nombre aléatoire est chiffré dans le module de sécurité 10 par la clé privée PAKV, de façon à obtenir un nombre aléatoire chiffré A' (A'=PAKV(A)). Celui-ci est transmis au récepteur 11. Le nombre aléatoire chiffré A' est déchiffré dans le récepteur au moyen de la clé publique PAKB, ce qui permet d'obtenir le nombre aléatoire initial A.

De façon inverse, le récepteur 11 génère un nombre aléatoire B, représenté entouré d'un cercle sur la figure 1. Ce nombre aléatoire B est chiffré dans le récepteur en utilisant la clé publique PAKB. On obtient donc un nombre aléatoire chiffré B' (B'=PAKB(B)) qui est transmis au module de sécurité 10. Le nombre aléatoire chiffré B' est déchiffré dans le module de sécurité au moyen de la clé privée PAKV, ce qui permet d'obtenir le nombre aléatoire initial B.

De cette façon, aussi bien le module de sécurité que le récepteur disposent du nombre aléatoire A généré par le module de sécurité et du nombre aléatoire B généré par le récepteur. Ces deux nombres aléatoires sont combinés de façon à générer un nombre aléatoire, qui sera utilisé, dans une première forme de réalisation comme clé de session SK. La combinaison peut être effectuée par une simple concaténation des deux nombres, par une fonction OU EXCLUSIF ou par toute autre combinaison appropriée. La clé de session SK ainsi générée est utilisée pour toutes les communications sécurisées entre le module de sécurité et le récepteur.

Ce mode de réalisation offre une grande sécurité à l'utilisateur puisqu'il est réputé être impossible de connaître la clé privée contenue dans le module de sécurité. S'il est possible d'imposer un nombre déterminé en lieu et place du nombre aléatoire B dans le récepteur, il n'est par contre pas possible d'imposer un nombre aléatoire A dans le module de sécurité. De manière similaire, on peut, par des moyens techniques sophistiqués, déterminer la clé publique PAKB, mais on ne peut pas en déduire la clé privée PAKV. Par conséquent, le fait que chacun des dispositifs génère un nombre aléatoire et que ces nombres sont chiffrés avec des clés asymétriques, empêche de tromper le dispositif en imposant des clés et des nombres déterminés.

Dans le mode de réalisation selon la figure 2, comme dans celui de la figure 1, un nombre aléatoire est généré par chacun des dispositifs. Il est chiffré par la clé correspondante et transmis à l'autre dispositif sous forme chiffrée. Le nombre aléatoire A reçu par le récepteur 11 est ensuite chiffré de nouveau, cette fois par la clé publique PAKB du récepteur, de façon à obtenir un nouveau nombre chiffré A" (A"=PAKB(A)) qui est envoyé au module de sécurité 10. Il y est déchiffré grâce à la clé privée PAKV. Si les clés privée PAKV et publique PAKB utilisées respectivement dans le module de sécurité 10 et dans le récepteur 11 sont appariées, le nombre A ainsi obtenu est identique au nombre aléatoire A d'origine généré par le module de sécurité. Tel que décrit en référence à la figure 2, le procédé comporte une étape de comparaison 12 entre le nombre aléatoire A provenant du déchiffrement du nombre A" chiffré dans le récepteur 11 et le nombre aléatoire A généré par le module de sécurité 10. Si ces nombres ne sont pas identiques, on peut en déduire que le module de sécurité n'est pas apparié au récepteur et que les communications ou les transferts d'informations doivent être interrompus. Ceci peut par exemple se produire lorsqu'un module de sécurité est introduit dans un récepteur différent de celui pour lequel il a été apparié ou lorsqu'un module de sécurité est simulé par exemple au moyen d'un ordinateur.

De façon similaire, le nombre aléatoire B reçu par le module de sécurité 10 est également chiffré par la clé privée PAKV de ce module, de façon à obtenir un nombre chiffré B" (B"=(PAKV(B)). Celui-ci est envoyé au récepteur 11, dans lequel il est déchiffré au moyen de la clé publique PAKB. On obtient ainsi un nombre aléatoire B qui est comparé au nombre aléatoire B d'origine généré par le récepteur 11. Comme précédemment, les deux nombres aléatoires sont comparés dans une étape de comparaison 12. Si ces deux nombres aléatoires ne sont pas identiques, la communication est interrompue.

Si la comparaison des nombres aléatoires donne un résultat positif, c'est-à-dire si le module de sécurité 10 et le récepteur 11 sont appariés, une clé de session SK est générée en utilisant une combinaison des nombres aléatoires A et B. Cette clé de session est utilisée pour les communications sécurisées ultérieures entre le module de sécurité et le récepteur.

Ce mode de réalisation présente l'avantage que les nombres aléatoires avant et après chiffrement sont comparés aussi bien dans le module de sécurité 10 que dans le récepteur 11. De cette façon, même si un tiers s'approprie de la clé publique du récepteur, celles-ci ne pourront pas être utilisées pour déchiffrer les messages échangés entre le module de sécurité et le récepteur. De même, si un module de sécurité est utilisé sur un récepteur pour lequel il n'est pas prévu, les informations ne pourront pas être déchiffrées.

Dans le procédé selon la figure 3, on ajoute au nombre aléatoire tel que décrit précédemment, par exemple le nombre aléatoire A tel que décrit en référence aux figures 1 et 2, deux parties b et c ayant chacune une fonction prédéfinie. b est un nombre aléatoire généré dans le module de sécurité 10. c est un nombre prédéfini fixe, dénommé "motif", qui est mémorisé dans le module de sécurité 10 et dans le récepteur 11. Ce motif peut par exemple être formé d'une succession de 0 et de 1 alternés.

Selon une première forme de réalisation, les trois éléments, à savoir le nombre aléatoire A, le nombre aléatoire b et le motif c sont chiffrés au moyen de la clé privée PAKV. On obtient ainsi un nombre A* tel que A*=PAKV (A, b, c).

Ce nombre A* est transmis au récepteur 11, dans lequel il est déchiffré au moyen de la clé publique PAKB. Ce déchiffrement doit aboutir aux trois nombres A, b et c si le module de sécurité 10 et le récepteur 11 sont appariés. Comme le nombre c a une valeur prédéfinie connue, le récepteur peut facilement effectuer une vérification de cette valeur. A cet effet, le récepteur effectue une comparaison entre la valeur de c mémorisée dans le récepteur et celle obtenue après déchiffrement. Si ces deux valeurs ne sont pas identiques, l'échange d'informations avec le module de sécurité est arrêté.

Le nombre aléatoire b est renvoyé pour vérification au module de sécurité 10. Pour ceci, il est tout d'abord chiffré dans le récepteur 11 au moyen de la clé publique PAKB, ce qui donne le nombre b" (b"=PAKB(b)). Ce nombre b" est ensuite envoyé au module de sécurité 10 dans lequel il est déchiffré grâce à la clé privée PAKV. Le nombre ainsi déchiffré est comparé au nombre b initial et l'échange d'informations est interrompu si ces deux nombres ne sont pas identiques.

Selon une deuxième forme de réalisation, les trois éléments, à savoir le nombre aléatoire A, le nombre aléatoire b et le motif sont chiffrés séparément dans le module de sécurité 10 au moyen de la clé privée PAKV. On obtient alors trois nombres chiffrés. Lors du déchiffrement, pour autant que le module de sécurité et le récepteur soient appariés, on obtient les nombres aléatoires A et b, ainsi que le motif c, comme précédemment.

La clé de session SK est formée d'une combinaison selon une règle connue, du nombre aléatoire A générée par le module de sécurité 10, du nombre aléatoire B généré par le récepteur et éventuellement du nombre aléatoire b généré par le module .de sécurité et/ou du motif c. Comme tous ces éléments sont connus aussi bien par le module de sécurité 10 que par le récepteur 11, la clé de session peut être formée.

Ce mode de réalisation est avantageux à différents points de vues. D'une part, il permet d'effectuer une première vérification de l'appariement du module de sécurité 10 et du récepteur 11 grâce au motif c, en utilisant une communication unidirectionnelle entre les deux dispositifs. Lorsque les dispositifs ne sont pas appariés, il est souhaitable d'effectuer aussi peu d'échanges d'informations que possible, ce qui est réalisé grâce à la vérification du contenu du motif c. D'autre part, en renvoyant le nombre aléatoire b, il est possible de vérifier de manière sûre et fiable, l'appariement entre ces deux dispositifs, sans toutefois transmettre deux fois le nombre aléatoire A. Ceci améliore encore la sécurité des échanges d'informations puisque l'on minimise la quantité d'informations confidentielles qui sont échangées entre les deux dispositifs.

Il est à noter que l'on peut également ajouter au nombre aléatoire A, uniquement un motif c. La vérification de l'appariement entre les deux dispositifs ne se fait alors que sur le motif c. Dé manière similaire, on peut également ajouter au nombre aléatoire A, uniquement un autre nombre aléatoire b, sans motif c, la vérification se faisant dans le module de sécurité 10, sur le nombre aléatoire b.

Dans le mode de réalisation illustré par la figure 4, les premières étapes du procédé se déroulent de la même façon que dans celui illustré par la figure 2. Des nombres aléatoires A et B sont générés respectivement par le module de sécurité 10 et par le récepteur 11. Ils sont échangés et vérifiés de façon à s'assurer que le module de sécurité 10 et le récepteur 11 sont bien appariés. Dans ce mode de réalisation, le module de sécurité et le récepteur disposent en outre d'une clé symétrique PHK, portant la référence 13. Les nombres aléatoires A et B ne sont pas simplement combinés entre eux pour obtenir une clé de session SK, comme dans le mode de réalisation de la figure 2, mais ils sont également combinés avec la clé symétrique 13. La combinaison de ces trois éléments peut se faire comme précédemment, par concaténation ou par toute autre fonction appropriée. Selon une forme particulière de l'invention, la clé de session SK est formée par le chiffrement par la clé symétrique 13 des deux nombres A et B concaténés (SK = PHK (A, B)).

Ceci présente l'avantage de rendre encore plus difficile le déchiffrement non autorisé de messages et oblige à disposer de toutes les clés pour pouvoir obtenir une information utilisable. La sécurité du dispositif est ainsi encore renforcée. Ce mode de réalisation est également avantageux parce qu'il est relativement long et difficile de générer un très grand nombre de paires de clés asymétriques différentes. Pour des questions de simplification, face à un très grand nombre d'utilisateurs, il est souhaitable d'assigner la même paire de clés à plusieurs couples module de sécurité / récepteur. Par contre, la clé symétrique est unique. Ainsi, en utilisant une clé symétrique en plus des autres clés, il est possible de garantir qu'un module de sécurité est uniquement utilisable avec le récepteur correspondant.

Il est possible de mémoriser la clé de session générée par exemple lors de la première utilisation du dispositif et d'utiliser toujours cette clé. Toutefois, pour des raisons de sécurité, il est judicieux de générer une nouvelle clé chaque fois qu'une nouvelle session est commencée, une session étant définie comme la période séparant le début et la fin de l'échange d'informations entre les deux dispositifs. Afin d'augmenter encore la sécurité des communications, il est même possible de changer de clé selon des intervalles choisis, par exemple réguliers ou selon un algorithme défini, pendant une même session, par exemple toutes les deux heures. Ainsi, toutes les informations qui auraient pu être obtenues de façon non autorisée, ne pourront plus être utilisées après cette durée maximale de validité de la clé de session.

Selon un mode de réalisation particulier de l'invention, on peut utiliser un module de sécurité "intelligent" ou des moyens analogues, qui permettent de mesurer différents paramètres physiques, tels que notamment l'impédance de ligne ou la consommation électrique. La valeur de ce ou de ces paramètres est comparée, à intervalles réguliers, à une valeur de référence. Lorsque l'on constate une différence, au-delà d'un seuil de tolérance, entre ces valeurs comparées, on peut en déduire qu'il existe un risque de lecture non conforme d'informations sur le système. Dans ce cas, on peut, bien que cela ne soit pas une solution préférée, couper tout échange d'informations entre le récepteur et le module de sécurité. Une solution préférée consiste à envoyer une requête au récepteur, demandant la génération d'une nouvelle clé de session. L'échange d'informations est bloqué si le récepteur n'obtempère pas. Ceci permet d'obtenir un système dynamique dans lequel toute tentative d'accès à des informations confidentielles est surveillée. La mesure des paramètres physiques peut également être implantée dans le récepteur.

Comme cela est bien connu de l'homme du métier, un récepteur pour la télévision à péage comporte essentiellement une unité de calcul, une mémoire morte, un démultiplexeur, un désembrouilleur, un convertisseur numérique/analogique, une mémoire externe et un décompresseur de son et d'images. Dans les systèmes actuels, l'unité de calcul, la mémoire morte et le désembrouilleur peuvent être contenus dans une même puce électronique. Dans les systèmes de l'art antérieur, la clé publique PAKB est généralement contenue dans la mémoire externe. Celle-ci est accessible, de sorte qu'il est possible de lire ou de modifier son contenu, ce qui peut engendrer des risques de lecture non autorisée d'informations.

Afin de minimiser ce risque, la clé publique PAKB et/ou la clé symétrique 13 peut avantageusement être stockée soit dans la mémoire morte, soit dans le désembrouilleur. Ceci augmente très fortement la sécurité, parce que, pour modifier l'une des clés, il est indispensable de changer de puce électronique, ce qui est peu intéressant du point de vue économique et qui implique que l'on puisse se procurer des puces contrefaites. La sécurité des communications est ainsi particulièrement efficace.

Il est à noter que, dans la description qui précède, la clé portant la référence 13 sur la figure 4 et décrite comme étant une clé symétrique. Il est toutefois également possible d'utiliser une paire de clés asymétriques à la place de cette clé symétrique. Dans ce cas, on utilise deux paires de clés asymétriques. L'une des paires de clés peut être commune pour un groupe d'utilisateurs et l'autre peut être unique. Les deux paires peuvent également être uniques.

Dans la description des exemples ci-dessus, le premier dispositif correspond au module de sécurité et le deuxième dispositif correspond au récepteur. Il est clair que le procédé selon l'invention fonctionne de la même manière si le premier dispositif est le récepteur et le deuxième dispositif est le module de sécurité.

## Revendications

1. Procédé d'échange sécurisé d'informations entre deux dispositifs localement connectés entre eux, notamment entre un module de sécurité et un récepteur, le premier dispositif (10) comportant au moins une première clé de chiffrement (PAKV) d'une paire de clés de chiffrement asymétriques et le second dispositif (11) comportant au moins une seconde clé de chiffrement (PAKB) de ladite paire de clés de chiffrement asymétriques, ces clés étant préalablement initialisées dans le premier et le second dispositif, **caractérisé en ce que** ledit procédé comporte les étapes consistant à :
- générer, dans le premier dispositif (10) au moins un premier nombre aléatoire (A),
- générer, dans le second dispositif (11), au moins un second nombre aléatoire (B),
- chiffrer ledit premier nombre aléatoire (A) par ladite première clé de chiffrement (PAKV),
- chiffrer ledit second nombre aléatoire (B) par ladite seconde clé de chiffrement (PAKB),
- transmettre ledit premier nombre aléatoire chiffré (A') au second dispositif (11),
- transmettre ledit second nombre aléatoire chiffré (B') au premier dispositif (10),
- déchiffrer, dans ledit second dispositif (11), le premier nombre aléatoire chiffré (A'),
- déchiffrer, dans ledit premier dispositif (10), le second nombre aléatoire chiffré (B')
- combiner lesdits nombres aléatoires (A, B) générés par l'un des dispositifs (10, 11) et reçus par l'autre dispositif pour générer une clé de session (SK),
- et utiliser la clé de session (SK) pour chiffrer tout ou partie des informations échangées entre le premier et le second dispositif (10,11).

2. Procédé d'échange d'informations selon la revendication 1, **caractérisé en ce que** le nombre aléatoire (A), généré par le premier dispositif (10) et déchiffré par le second dispositif (11)
- est chiffré par ledit second dispositif (11) au moyen de ladite seconde clé de chiffrement (PAKB),
- est transmis de façon chiffrée audit premier dispositif (10),
- est déchiffré dans ce premier dispositif (10) au moyen de la première clé de chiffrement (PAKV) et
- est comparé audit nombre aléatoire (A) généré par le premier dispositif (10),
et **en ce que** le transfert d'informations est arrêté si les nombres aléatoires comparés ne sont pas identiques.

3. Procédé d'échange d'informations selon la revendication 1, **caractérisé en ce que** le nombre aléatoire (B), généré par le second dispositif (11) et déchiffré par le premier dispositif (10)
- est chiffré par ledit premier dispositif (10) au moyen de ladite première clé de chiffrement (PAKV),
- est transmis de façon chiffrée audit second dispositif (11),
- est déchiffré dans ce second dispositif (11) au moyen de la seconde clé de chiffrement (PAKB) et
- est comparé audit nombre aléatoire (B) généré par le second dispositif (11),
et **en ce que** le transfert d'informations est arrêté si les nombres aléatoires comparés ne sont pas identiques.

4. Procédé d'échange d'informations selon la revendication 1, dans lequel ledit premier dispositif (10) et ledit second dispositif (11) contiennent une clé de chiffrement symétrique (13), **caractérisé en ce que** les nombres aléatoires (A, B) sont combinés avec ladite clé symétrique (13) pour générer une clé de session (SK).

5. Procédé d'échange d'informations selon la revendication 1 ou 4, **caractérisé en ce que** la combinaison est une concaténation.

6. Procédé d'échange d'informations selon la revendication 1, **caractérisé en ce que** l'on regénère la clé de session (SK) en fonction d'un paramètre d'utilisation déterminé.

7. Procédé d'échange d'informations selon la revendication 6, **caractérisé en ce que** le paramètre d'utilisation déterminé est la durée d'utilisation.

8. Procédé d'échange d'informations selon la revendication 6, **caractérisé en ce qu'**au moins l'un des deux dispositifs (10, 11) mesure au moins un paramètre physique représentatif de la communication, tels que l'impédance de ligne et/ou la consommation électrique, **en ce que** l'on compare les valeurs mesurées à des valeurs de référence, et **en ce que** l'on agit sur l'échange d'informations lorsque les paramètres mesurés diffèrent des valeurs de référence de plus d'une valeur de seuil.

9. Procédé d'échange d'informations selon la revendication 8, **caractérisé en ce que** l'on agit en arrêtant l'échange d'informations entre les deux dispositifs (10, 11).

10. Procédé d'échange d'informations selon les revendications 6 et 8, **caractérisé en ce que** le paramètre d'utilisation déterminé est le paramètre physique représentatif de la communication.

11. Procédé d'échange d'informations selon la revendication 1, **caractérisé en ce que**
- au moins l'un des dispositifs (10, 11) génère au moins un nombre aléatoire supplémentaire (b),
- ce nombre aléatoire supplémentaire (b) est chiffré par ladite première clé de chiffrement (PAKV),
- ce nombre aléatoire supplémentaire chiffré est transmis au second dispositif (11),
- ce nombre aléatoire supplémentaire chiffré transmis est déchiffré dans ce second dispositif (11),
- le nombre aléatoire supplémentaire déchiffré est chiffré par ladite deuxième clé de chiffrement (PAKB)
- le nombre aléatoire supplémentaire chiffré est transmis au premier dispositif (10)
- le nombre aléatoire supplémentaire déchiffré dans le premier dispositif est comparé au nombre aléatoire supplémentaire initial (b) généré dans ledit premier dispositif,
- l'échange d'information est interrompu si la comparaison indique que les deux nombres comparés ne sont pas identiques.

12. Procédé d'échange d'informations selon la revendication 1, **caractérisé en ce que**
- au moins l'un des dispositifs (10, 11) détermine au moins un nombre fixe prédéfini (c) mémorisé dans les deux dispositifs (10, 11),
- ce nombre fixe prédéfini (c) est chiffré par ladite première clé de chiffrement (PAKV),
- ce nombre fixe prédéfini chiffré est transmis au second dispositif (11),
- ce nombre fixe prédéfini chiffré transmis est déchiffré dans ce second dispositif (11),
- le nombre fixe prédéfini déchiffré dans le deuxième dispositif est comparé au nombre fixe prédéfini mémorisé dans ce deuxième dispositif,
- l'échange d'information est interrompu si la comparaison indique que les deux nombres comparés ne sont pas identiques.

13. Procédé d'échange d'informations selon la revendication 11 ou 12, **caractérisé en ce que** l'on chiffre chacun des nombres (A, b, c) séparément.

14. Procédé d'échange d'informations selon la revendication 11 ou 12, **caractérisé en ce que** l'on chiffre une combinaison de chacun des nombres (A, b, c).

15. Récepteur comprenant des moyens adaptés pour la mise en oeuvre du procédé selon l'une quelconque des revendications 1 à 14, ce récepteur comportant au moins une unité de calcul, une mémoire morte, un démultiplexeur, un désembrouilleur, un convertisseur numérique/analogique, une mémoire externe et un décompresseur de son et d'images au moins l'unité de calcul, la mémoire morte et le désembrouilleur étant contenus dans une même puce électronique et au moins l'une des clés de chiffrement (PAKB, 13) étant stockée dans ladite puce électronique.

16. Récepteur selon la revendication 15, **caractérisé en ce qu'**au moins l'un des nombres (A, b, c) est stocké dans ladite puce électronique.

## Claims

1. Data exchange method between two devices locally connected to one another, especially between a security module and a receiver, the first device (10) comprising at least one first encrypting key (PAKV) of a pair of asymmetric keys and the second device (11) comprising at least the second encrypting key (PAKB) of said pair of asymmetric keys, these keys being previously initialised in the first and second device, **characterized in that**, said method includes the steps consisting of:
- generating, at least one first random number (A) in the first device (10)
- generating, at least one second random number (B) in the second device (11),
- encrypting said first random number (A) by said first encrypting key (PAKV),
- encrypting said second random number (B) by said second encrypting key (PAKB),
- transmitting said first encrypted random number (A') to the second device (11),
- transmitting said second encrypted random number (B') to the first device (10),
- decrypting, the first encrypted random number (A') in said second device (11)
- decrypting, the second encrypted random number (B') in said first device (10),
- combining said random numbers (A, B) generated by one of the devices (10, 11) and received by the other device to generate a session key (SK),
- and using the session key (SK) to encrypt and decrypt all or part of the exchanged data between the first and second device (10, 11).

2. Data exchange method according to claim 1, **characterized in that** random number (A), generated with the first device (10) and decrypted with the second device (11)
- is encrypted by said second device (11) by means of said second encrypting key (PAKB),
- is transmitted in a encrypted form to said first device (10),
- is decrypted in this first device (10) by means of the first encrypting key (PAKV) and
- is compared to said random number (A) generated by the first device (10),
and **in that** the data transfer is stopped if the compared random numbers are not identical.

3. Data exchange method according to claim 1, **characterized in that** the random number (B), generated by the second device (11) and decrypted by the first device (10)
- is encrypted by said first device (10) by means of said first encrypting key (PAKV),
- is transmitted in a encrypted form to said second device (11),
- is decrypted in this second device (11) by means of the second encrypting key (PAKB) and
- is compared to said random number (B) generated by the second device (11),
and **in that** the data transfer is stopped if the compared random numbers are not identical.

4. Data exchange method according to claim 1, in which said first device (10) and said second device (11) contain a symmetric encrypting key (13), **characterized in that** the random numbers (A, B) are combined with said symmetric key (13) to generate a session key (SK).

5. Data exchange method according to claim 1 or 4, **characterized in that** the combination is a concatenation.

6. Data exchange method according to claim 1, **characterized in that** the session key (SK)is restored in function of a determined parameter of use.

7. Data exchange method according to claim 6, **characterized in that** the determined parameter of use is the duration of use.

8. Data exchange method according to claim 6, **characterized in that** at least one of the two devices (10, 11) measures at least one representative physical parameter of the communication, such as the line impedance and/or the electric consumption, **in that** one compares the values measured to the reference values, and concerning the data exchange when the measured parameters differ from the reference values more than a threshold value.

9. Data exchange method according to claim 8, **characterized in that** it concerns stopping the data exchange between the two devices (10, 11).

10. Data exchange method according to claims 6 and 8, **characterized in that** the determined parameter of use is the representative physical parameter of communication.

11. Data exchange method according to claim 1, **characterized in that**
- at least one of the devices (10, 11) generates at least one supplementary random number (b),
- this supplementary random number (b) is encrypted by said first encrypting key (PAKV)
- this supplementary encrypted random number is transmitted to the second device (11),
- this transmitted encrypted supplementary random number is decrypted in this second device (11),
- the decrypted supplementary random number is encrypted by said second encrypting key (PAKB)
- the supplementary encrypted random number is transmitted to the first device (10)
- the supplementary random number decrypted in the first device is compared to the initial supplementary random number (b) generated in said first device,
- the information exchange is interrupted if the comparison indicates that the two compared numbers are not identical.

12. Data exchange method according to claim 1, **characterized in that**
- at least one of the devices (10, 11) determines at least one predefined fixed number (c) memorized in the two devices (10, 11),
- this predefined fixed number (c) is encrypted by said first encrypting key (PAKV),
- this predefined fixed encrypted number is transmitted to the second device (11),
- this transmitted encrypted predefined fixed number is decrypted in this second device (11),
- the predefined fixed number decrypted in the second device is compared to the predefined fixed number memorized in this second device,
- the data exchange is interrupted if the comparison indicates that the two compared numbers are not identical.

13. Data exchange method according to claim 11 or 12, **characterized in that** each of the numbers (A, b, c) is encrypted separately.

14. Data exchange method according to claim 11 or 12, **characterized in that** a combination of each of the numbers (A, b, c) is encrypted.

15. Receiver comprising means adapted to carrying out the method according to any of the claims 1 to 14, this receiver comprising at least one calculation unit, a read-only memory, a demultiplexer, a descrambler, a digital/analogl converter, an external memory and a sound and image descrambler, at least the calculation unit, the read-only memory and the descrambler being contained in a same electronic chip and at least one of the encrypting keys (PAKB, 13) being stored in said electronic chip.

16. Receiver according to claim 15, **characterized in that** at least one of the numbers (A, b, c) is stored in said electronic chip.

## Patentansprüche

1. Verfahren des gesicherten Informationsaustauschs zwischen zwei lokal miteinander verbundenen Vorrichtungen, insbesondere zwischen einem Sicherheitsmodul und einem Empfänger, wobei die erste Vorrichtung (10) zumindest einen ersten Verschlüsselungsschlüssel (PAKV) eines Paares asymmetrischer Verschlüsselungsschlüssel aufweist und die zweite Vorrichtung (11) zumindest einen zweiten Verschlüsselungsschlüssel (PAKB) des benannten Paares asymmetrischer Verschlüsselungsschlüssel aufweist, und wobei diese Schlüssel im Voraus in der ersten und zweiten Vorrichtung initialisiert werden, **dadurch gekennzeichnet, dass** das Verfahren die Schritte aufweist, die darin bestehen,
- in der ersten Vorrichtung (10) zumindest eine erste Zufallszahl (A) zu erzeugen,
- in der zweiten Vorrichtung (11) zumindest eine zweite Zufallszahl (B) zu erzeugen,
- die erste Zufallszahl (A) mit dem ersten Verschlüsselungsschlüssel (PAKV) zu verschlüsseln,
- die zweite Zufallszahl (B) mit dem zweiten Verschlüsselungsschlüssel (PAKB) zu verschlüsseln,
- die verschlüsselte erste Zufallszahl (A') an die zweite Vorrichtung (11) zu übermitteln,
- die verschlüsselte zweite Zufallszahl (B') an die erste Vorrichtung (10) zu übermitteln,
- die erste verschlüsselte Zufallszahl (A') in der zweiten Vorrichtung (11) zu entschlüsseln,
- die zweite verschlüsselte Zufallszahl (B') in der ersten Vorrichtung (10) zu entschlüsseln,
- die durch die eine der Vorrichtungen (10, 11) erzeugten und durch die andere Vorrichtung empfangenen Zufallszahlen (A, B) zu kombinieren, um einen Sitzungsschlüssel (SK) zu erzeugen,
- und den Sitzungsschlüssel (SK) zu verwenden, um alle oder einen Teil der zwischen der ersten und zweiten Vorrichtung (10, 11) ausgetauschten Informationen zu verschlüsseln.

2. Verfahren des Informationsaustauschs nach Anspruch 1, **dadurch gekennzeichnet, dass** die durch die erste Vorrichtung (10) erzeugte und durch die zweite Vorrichtung (11) entschlüsselte Zufallszahl (A)
- durch die zweite Vorrichtung (11) mit dem zweiten Verschlüsselungsschlüssel (PAKB) verschlüsselt wird,
- verschlüsselt an die erste Vorrichtung (10) übermittelt wird,
- in dieser ersten Vorrichtung (10) mit dem ersten Verschlüsselungsschlüssel (PAKV) entschlüsselt wird und
- mit der durch die erste Vorrichtung (10) erzeugten Zufallszahl (A) verglichen wird,
und **dadurch**, dass die Informationsübermittlung unterbrochen wird, wenn die verglichenen Zufallszahlen nicht identisch sind.

3. Verfahren des Informationsaustauschs nach Anspruch 1, **dadurch gekennzeichnet, dass** die durch die zweite Vorrichtung (11) erzeugte und durch die erste Vorrichtung (10) entschlüsselte Zufallszahl (B)
- durch die erste Vorrichtung (10) mit dem ersten Verschlüsselungsschlüssel (PAKV) verschlüsselt wird,
- verschlüsselt an die zweite Vorrichtung (11) übermittelt wird,
- in dieser zweiten Vorrichtung (11) mit dem zweiten Verschlüsselungsschlüssel (PAKB) entschlüsselt wird und
- mit der durch die zweite Vorrichtung (11) erzeugten Zufallszahl (B) verglichen wird,
und **dadurch**, dass die Informationsübermittlung unterbrochen wird, wenn die verglichenen Zufallszahlen nicht identisch sind.

4. Verfahren des Informationsaustauschs nach Anspruch 1, bei dem die erste Vorrichtung (10) und die zweite Vorrichtung (11) einen symmetrischen Verschlüsselungsschlüssel (13) enthalten, **dadurch gekennzeichnet, dass** die Zufallszahlen (A, B) mit dem symmetrischen Schlüssel (13) kombiniert werden, um einen Sitzungsschlüssel (SK) zu erzeugen.

5. Verfahren des Informationsaustauschs nach Anspruch 1 oder 4, **dadurch gekennzeichnet, dass** die Kombination eine Verkettung ist.

6. Verfahren des Informationsaustauschs nach Anspruch 1, **dadurch gekennzeichnet, dass** der Sitzungsschlüssel (SK) in Abhängigkeit von einem bestimmten Benutzungsparameter erneuert wird.

7. Verfahren des Informationsaustauschs nach Anspruch 6, **dadurch gekennzeichnet, dass** der bestimmte Benutzungsparameter die Benutzungsdauer ist.

8. Verfahren des Informationsaustauschs nach Anspruch 6, **dadurch gekennzeichnet, dass** zumindest eine der beiden Vorrichtungen (10, 11) zumindest einen physikalischen Parameter wie die Leitungsimpedanz und/oder den Stromverbrauch misst, der für die Kommunikation repräsentativ ist, **dadurch**, dass die gemessenen Werte mit Bezugswerten verglichen werden, und **dadurch**, dass auf den Informationsaustausch eingewirkt wird, wenn sich die gemessenen Parameter von den Bezugswerten um mehr als einen Schwellenwert unterscheiden.

9. Verfahren des Informationsaustauschs nach Anspruch 8, **dadurch gekennzeichnet, dass** eingewirkt wird, indem der Informationsaustausch zwischen den beiden Vorrichtungen (10, 11) unterbrochen wird.

10. Verfahren des Informationsaustauschs nach Ansprüchen 6 und 8, **dadurch gekennzeichnet, dass** der bestimmte Benutzungsparameter der für die Kommunikation repräsentative physikalische Parameter ist.

11. Verfahren des Informationsaustauschs nach Anspruch 1, **dadurch gekennzeichnet, dass**
- zumindest eine der Vorrichtungen (10, 11) zumindest eine zusätzliche Zufallszahl (b) erzeugt,
- diese zusätzliche Zufallszahl (b) mit dem ersten Verschlüsselungsschlüssel (PAKV) verschlüsselt wird,
- diese verschlüsselte zusätzliche Zufallszahl an die zweite Vorrichtung (11) übermittelt wird,
- diese übermittelte, verschlüsselte zusätzliche Zufallszahl in der zweiten Vorrichtung (11) entschlüsselt wird,
- die entschlüsselte zusätzliche Zufallszahl mit dem zweiten Verschlüsselungsschlüssel (PAKB) verschlüsselt wird,
- die verschlüsselte zusätzliche Zufallszahl an die erste Vorrichtung (10) übermittelt wird,
- die in der ersten Vorrichtung entschlüsselte zusätzliche Zufallszahl mit der in der ersten Vorrichtung erzeugten, ursprünglichen zusätzlichen Zufallszahl (b) verglichen wird,
- der Informationsaustausch unterbrochen wird, wenn der Vergleich andeutet, dass die beiden verglichenen Zahlen nicht identisch sind.

12. Verfahren des Informationsaustauschs nach Anspruch 1, **dadurch gekennzeichnet, dass**
- zumindest eine der Vorrichtungen (10, 11) zumindest eine im Voraus definierte, feststehende Zahl (c) ermittelt, die in den beiden Vorrichtungen (10, 11) gespeichert ist,
- diese im Voraus definierte, feststehende Zahl (c) mit dem ersten Verschlüsselungsschlüssel (PAKV) verschlüsselt wird,
- diese im Voraus definierte, feststehende verschlüsselte Zahl an die zweite Vorrichtung (11) übermittelt wird,
- diese im Voraus definierte, feststehende verschlüsselte und übermittelte Zahl in dieser zweiten Vorrichtung (11) entschlüssel_t wird,
- die in der zweiten Vorrichtung entschlüsselte, im Voraus definierte feststehende Zahl mit der in dieser zweiten Vorrichtung gespeicherten, im Voraus definierten feststehenden Zahl verglichen wird,
- der Informationsaustausch unterbrochen wird, wenn der Vergleich andeutet, dass die beiden verglichenen Zahlen nicht identisch sind.

13. Verfahren des Informationsaustauschs nach Anspruch 11 oder 12, **dadurch gekennzeichnet, dass** jede der Zahlen (A, b, c) getrennt verschlüsselt wird.

14. Verfahren des Informationsaustauschs nach Anspruch 11 oder 12, **dadurch gekennzeichnet, dass** eine Kombination jeder der Zahlen (A, b, c) verschlüsselt wird.

15. Empfänger, für die Realisierung des Verfahrens nach einem der Ansprüche 1 bis 14 geeignete Mittel umfassend, wobei dieser Empfänger zumindest eine Berechnungseinheit, einen Festwertspeicher, einen Demultiplexer, einen Entwürfeler, einen Digital-Analog-Wandler, einen Fremdspeicher und einen Ton- und Bilddekompressor aufweist und wobei zumindest die Berechnungseinheit, der Festwertspeicher und der Entwürfeler auf ein und demselben Chip untergebracht sind und zumindest einer der Verschlüsselungsschlüssel (PAKB, 13) in diesem Chip gespeichert ist.

16. Empfänger nach Anspruch 15, **dadurch gekennzeichnet, dass** zumindest eine der Zahlen (A, b, c) im Chip gespeichert ist.
